# EUROPÄISCHE PATENTSCHRIFT

(11) **EP 1 423 487 B1**
(45) Veröffentlichungstag und Bekanntmachung des Hinweises auf die Patenterteilung: **28.12.2005**
(21) Anmeldenummer: 02762262.0
(22) Anmeldetag: 04.09.2002
(51) Int. Cl.: C09F 7/00, C09K 21/12, B27K 3/50, C09D 5/18, C08K 5/49

(54) **FLAMMHEMMENDES MITTEL UND DESSEN VERWENDUNG**
FLAME RETARDING AGENT AND USE THEREOF
AGENT IGNIFUGEANT ET UTILISATION

(30) Priorität: 07.09.2001 DE 10143906
(43) Veröffentlichungstag der Anmeldung: 02.06.2004
(73) Patentinhaber: Hawo Ökologische Produktions-, Handels- & Logistik GmbH & Co KG, 04936 Hohenbucko (DE)
(72) Erfinder: HAUPTVOGEL, Manfred, 04936 Hohenbucko (DE); WOLF, Jürgen, 04936 Schlieben (DE); TRESSEL, Ralf-Peter, 04916 Osteroda (DE)
(74) Vertreter: Seltmann, Reinhard
(86) Internationale Anmeldenummer: PCT/DE2002/003254
(87) Internationale Veröffentlichungsnummer: WO 2003/022948

(56) Entgegenhaltungen:
- CH-A- 288 732
- DE-B- 1 042 796
- GB-A- 2 169 278
- US-A- 1 707 587
- US-A- 2 442 707
- US-A- 4 305 976
- DATABASE WPI Section Ch, Week 197707 Derwent Publications Ltd., London, GB; Class A92, AN 1977-11826Y XP002228391 & JP 51 151746 A (DAINICHI NIPPON CABLES LTD), 26. Dezember 1976 (1976-12-26)
- DATABASE WPI Section Ch, Week 198238 Derwent Publications Ltd., London, GB; Class A21, AN 1982-80545E XP002228392 & JP 57 133147 A (TOKYO SHIBAURA ELECTRIC CO), 17. August 1982 (1982-08-17)
- DATABASE WPI Section Ch, Week 197715 Derwent Publications Ltd., London, GB; Class E16, AN 1977-26684Y XP002228393 & SU 526 645 A (SHUKSHIN A B), 3. September 1976 (1976-09-03)

## Beschreibung

Die Erfindung betrifft ein flammhemmendes Mittel auf der Grundlage eines modifizierten ungesättigten Oeles oder dessen Methylesters, welchem zur Verbesserung seiner flammwidrigen Eigenschaften weitere chemische Stoffe, die dem Bestreben, natürliche Bedingungen bei seiner Anwendung weitestgehend nicht zu beeinträchtigen, gerecht werden. Des weiteren betrifft die Erfindung auch die Verwendung des Flammschutzmittels.

Flammhemmende Mittel dienen in den verschiedensten Produkten dazu, deren Eigenschaften im Sinne einer Erhöhung der Widerstandsfähigkeit gegenüber einer Flamme wesentlich zu verbessern. Das kann Kunststoffe betreffen, wie aushärtbare Harze oder elastisch verbleibende Folien, es betrifft aber ebenso das grosse Gebiet des Holzschutzes, zumal hier zusätzlich ebenso noch andere Eigenschaften und daraus resultierende Wirkungen gefragt sind. Bisher wurden diese flammhemmenden Mittel regelmässig unter Verwendung bromierter oder halogenierter Pflanzenoele hergestellt.

Verschiedene schnelltrocknende Pflanzenoele mit einem hohen Anteil an ungesättigten Fettsäuren können durch die Addition unterschiedlicher chemischer Stoffe an die C=C - Doppelbindung oder durch Anbindung an die Carboxylgruppe neue stoffliche Verbindungen für vielfältige Einsatzbereiche erzeugen.

Der Anteil ungesättigter Fettsäuren ist bei Pflanzenoelen insbesondere u. a. aus Lein/Flachs, Hanf, Iberischer Drachenkopf, Crambe und Leindotter sehr hoch, nämlich bis ca. 90 Prozent. Die genannten Pflanzenoele unterscheiden sich in ihren Eigenschaften durch einen unterschiedlichen Aufbau der Triglyceridgruppe und in der Variation der jeweiligen ungesättigten Fettsäuren.

Die in der Vergangenheit durchgeführten Entwicklungen halogenierter Pflanzenoele als flammhemmende Stoffe erbrachten den Nachweis für die Einsatzbarkeit modifizierter Pflanzenoele als flammhemmende Stoffe.

So wird in der DD-OS 230 709 ein Verfahren zur Herstellung von bromhaltigen oelmodifizierten Phenolharzen, die zu flammwidrigen Schichtpressstoffen verarbeitet werden können, beschrieben. Zur Herstellung wird ein partiell bromiertes Pflanzenoel mit einem Masseverhältnis zum Brom vorzugsweise von 10 : 1 eingesetzt, welches einem Bromierungsgrad von > 0,1 entspricht. Damit ist nur ein geringer Teil der Doppelbindungen mit Brom gebunden. Die dadurch erreichte Flammschutzwirkung für damit hergestellte Schichtpressstoffe muss als eher gering eingeschätzt werden. Offensichtlich deshalb wird u. a. das Zusetzen eines Trialkoholphosphates als Weichmacher und Flammschutzmittel erwähnt.

Ein Teil der verbliebenen Doppelbindungen im Pflanzenoel wird für die Reaktion mit Phenolharzen benötigt. Die Schichtpressstoffe werden erfindungsgemäss einer Wärme- und Druckbehandlung unterzogen und härten hierbei aus. Dabei werden die bromhaltigen Additionsprodukte in den Pressstoff eingeschlossen. Bei Hitzewirkung tritt eine Flammwidrigkeit ein. Infolge des Einschlusses der wirksamen Bestandteile in den ausgehärteten Schichtpressstoff ist eine schnelle Wirkung als flammhemmendes Mittel nicht gegeben.

Nach der DE-OS 196 19 421 ist ein Verfahren zur Bromierung von ungesättigten Oelen einer Jodzahl gleich oder grösser 80 beschrieben, bei dem 100 Gewichtsteile des Oels in 50 bis 100 Gewichtsteilen eines Trialkylphosphats oder -phosphonats gelöst und mit der zur weitgehenden Absättigung erforderlichen Menge an Brom umgesetzt werden. Des weiteren ist das entstehende flammhemmende Mittel für eine Verwendung in Polyurethanschäumen vorgesehen.

Allen diesen Zusammensetzungen ist gemeinsam, dass sie als wesentliche Basis Brom- und/oder Halogenverbindungen als Mittel des Flammschutzes einsetzen, sodass Fertigprodukte oder Produktionsreste im Falle ihrer Entsorgung besonderer Massnahmen bedürfen.

Als repräsentativ für den aktuellen Stand der Technik sei beispielhaft des weiteren auf die in der DE-OS 27 40 092 vermittelte Lehre verwiesen, nach der in einer Polyamidharzmasse Melamincyanurat eingesetzt wird, um das sogenannte "Ausplatten" zu verhindern. Die DE-OS 3727352 gibt vor, Thermoplaste selbstverlöschend auszurüsten, indem diese durch den Gehalt einer Matrix aus einem Styrolblockpolymeren oder Styrol-Ethylen-Blockcopolymeren, Weichmacheranteilen, Polyolefinen hoher Dichte sowie Aluminium- oder Magnesiumhydroxid, Ammoniumpolyphosphat, Melamincyanurat und ein polymeres Hydroxyalkylderivat der Isocyanursäure gekennzeichnet sind. Hierbei handelt es sich um flammhemmende Mittel, die ausschliesslich für einen spezifischen Zweck entwickelt wurden und eingesetzt werden. Melamincyanurat neigt zur Sublimation, wodurch der mit diesem Mittel versetzte Kunststoff aufschäumen kann und die Schüttdichte verringert wird.

Deshalb wurde bereits vorgeschlagen, ein flammhemmendes Mittel zusammenzusetzen, indem dieses auf der Basis eines modifizierten Oelgemisches hergestellt ist, indem dieses Gemisch aus einem schnell trocknenden ungesättigten Oel, einem ätherischen terpenhaltigen Oel, einem Phosphorsäureester und einer borhaltigen Verbindung als fungizid wirkendem Bestandteil besteht, wobei die genannten Oele mindestens teilweise bromiert sind und das schnelltrocknende ungesättigte Oel ein Pflanzenoel ist. Ebenso ist das ätherische terpenhaltige Oel ein pflanzliches Oel.

Der Einsatz dieser Stoffverbindungen ist in vielfältigen Applikationen nachweisbar. Diese flammhemmenden Mittel aus halogenierten Pflanzenoelen charakterisieren sich so, dass
- eine brandhemmende und verzögernde Wirkung feststellbar ist,
- bei Entfernen einer mit modifiziertem Pflanzenoel behandelten Applikation aus dem Brandherd ein sofortiges Verlöschen der Flamme erfolgt,
- keine vollständige Veraschung des Körpers beim Ausbrennen erfolgt, vielmehr ist eine strukturerhaltende Wirkung erkennbar,
- bei Kunststoffen ein Abtropfen der verbrannten Substanz nicht erfolgt, sondern eine Verkrustung der Oberfläche eintritt.

Testuntersuchungen haben gezeigt, dass auf Grund der Wirkung im Brandfall für das mit einem flammhemmenden Mittel aus halogenierten Pflanzenoelen behandelte Produkt eine Einstufung in eine hohe Brandklasse erreichbar ist.

Halogenierte flammhemmende Mittel besitzen neben der flammtechnisch guten Wirksamkeit erhebliche Nachteile in den ökotoxischen Nebenreaktionen während eines Brandablaufes. Neben dem korrosiven Verhalten durch Bildung halogenierter Wasserstoffsäuren ist die Entstehung von Dioxinen und Furanen in Abhängigkeit des teils aromatischen Aufbaus halogenierter Flammschutzmittel und der in der verwendeten Applikation vorliegenden Aromaten möglich. Dies kann ebenfalls halogenierte Pflanzenoele betreffen, die zwar im chemischen Aufbau durch die langkettigen C-Verbindungen keine Voraussetzungen zur Bildung von Aromaten besitzen, es aber durch die Freisetzung des Halogens im Brandfall in Verbindung mit weiteren Stoffverbindungen zur Ausbildung gesundheitsschädlicher Stoffe kommen kann. Deshalb werden für eine Reihe von Produktbereichen im Kunststoffbereich, für Innenraumprofile und Innenbauteile insbesondere im Fahrzeugbereich, halogenfreie flammhemmende Mittel vorausgesetzt.

Bekannte halogenfreie flammhemmende Mittel haben ebenfalls Nachteile. Sind diese überwiegend aus Boraten bestehend, sind sie wasserlöslich und können als Holzschutzmittel über einen längeren Zeitraum aus dem Holz ausgewaschen werden. Handelt es sich um solche, die überwiegend aus Aluminium- und Magnesiumhydroxiden bestehen, werden diese im Kunststoffbereich eingesetzt und müssen einen Einsatzanteil von 60 bis 70 % aufweisen, um wirksam zu werden. Darunter leiden die mechanischen Eigenschaften eines herzustellenden Kunststoffes. Wird ein flammhemmendes Mittel überwiegend aus Antimontrioxid bestehend zusammengesetzt, gilt dieses als Synergist für halogenhaltige flammhemmende Mittel und halogenhaltige Kunststoffe. Es steht im Verdacht, krebserregend zu wirken und wird im pulverförmigen Zustand nur unter Beachtung von präventiven Schutzmassnahmen verarbeitet.

Pulverförmige flammhemmende Mittel können bei bestimmten Anwendungen, wie Span- und Faserplatten, Vliesen, faserverstärkten Bauteilen nur ungenügend im Profil fixiert werden. Hier kommt es bei der mechanischen Einarbeitung leicht zu ungleichmässigen Verteilungen und Entmischungen.

Diese Nachteile fordern zur Weiterentwicklung bekannter flammhemmender Mittel, die unter Verwendung von Pflanzenoelen hergestellt werden, geradezu heraus. Aufgabe der Erfindung ist es deshalb, die Zusammensetzung eines flammhemmenden Mittels zu entwickeln, bei dem auf die Halogenierung der Pflanzenoele durch eine neue Entwicklung für den halogenfreien Flammschutzmittelbereich in Verbindung von Pflanzenoelen und/oder deren Methylester mit stickstoff- und/oder phosphorhaltigen Stoffen verzichtet wird.

Die Aufgabe wird gelöst, indem ein flammhemmendes Mittel zunächst aus einem trocknenden Oel mit einem Anteil an ungesättigten Fettsäuren besteht und diese Bestandteile mit wenigstens einer phosphorhaltigen Komponente und mit wenigstens einer stickstoffhaltigen Kohlenstoffverbindung chemisch modifiziert sind, wobei vorhandene Komponenten mit weiteren flüssigkeitsbindenden Komponenten ergänzt sind.

Dabei ist das trocknende Oel mit einem Anteil an ungesättigten Fettsäuren durch ein Methylester des verwendeten trocknenden Oels ersetzt, das erfindungsgemäss vorzugsweise aus einem nativen Pflanzenoel umgeestert und das in einem Bereich von 5 bis 90 Gewichtsanteilen enthalten ist.

Das trocknende Oel ist ein Pflanzenoel, das ebenfalls vorzugsweise in einem Bereich von 5 bis 90 Gewichtsanteilen enthalten ist.

Wenigstens eine der phosphorhaltigen Komponenten ist eine phosphorhaltige Säure, die eine Orthophosphorsäure, eine Metaphosphorsäure, eine phosphorhaltige Säure oder eine Polyphosphorsäure ist.

Eine der phosphorhaltigen Komponenten kann ebenso ein Salz einer phosphorhaltitgen Säure sein, das der Gruppe der Natriumphosphate zugehörig ist, wobei das ein Natriumdihydrogenphosphat oder ein Dinatriumhydrogenphosphat sein kann. Es ist ebenso möglich, beide Komponenten gemeinsam zu verwenden.

Das Salz einer phosphorhaltigen Säure kann ebenso der Gruppe der Ammoniumphosphate zugehörig sein. Bei der Gruppe der Ammoniumphosphate kann das ein Monoammoniumphosphat, ein Diammoniumorthophosphat, ein Ammoniumdihydrogenphosphat oder ein Ammoniumpolyphosphat sein, die auch in der Mischung verwendet sind, wobei jeweils eine Komponente mit mindestens einer der anderen Komponenten verwendet ist.

Die phosphorhaltigen Komponenten können in einem Bereich von 5 bis 70 Gewichtsanteilen zugesetzt sein.

Als stickstoffhaltige Kohlenstoffverbindung(en) ist Cyanguanidin eingesetzt, es ist jedoch ebenso möglich, Guanidincarbonat, Guanidiniumthiocarbonat, einen Harnstoff, Melamin, Melamincyanurat, Cyanursäure, Barbitursäure oder Ammoniumthiocyanat oder eine Mischung aus wenigstens 2 Komponenten der genannten Stoffe zu verwenden. Diese stickstoffhaltigen Kohlenstoffverbindungen sind regelmässig in einem Bereich von 10 bis 60 % Gewichtsanteilen zugesetzt.

Damit das flammhemmende Mittel einen zweckentsprechenden Verarbeitungsgrad aufweisen kann, können flüssigkeitsbindende Komponenten verwendet sein. Im einzelnen hat es sich als zweckmässig erwiesen, dafür Calciumoxid, Calciumcarbonat, Ammoniumsulfat, Silikatleichtschaum, roten Phosphor oder wenigstens eine der genannten Komponenten mit mindestens einer anderen der genannten Komponenten einzusetzen. Bei Verwendung als Holzschutzmittel sind zur Erreichung fungizider und insektizider Eigenschaften weitere chemische Verbindungen hinzugefügt.

Ein durch die genannte Zusammensetzung charakterisiertes flammhemmendes Mittel kann als Bestandteil eines Dämmstoffes eingesetzt sein, es kann Bestandteil eines Füllstoffes sein oder es kann in der Grundmischung zur Herstellung von Span- beziehungsweise Faserplatten eingesetzt sein. Es ist ebenso möglich, dass ein derart charakterisiertes flammhemmendes Mittel als Bestandteil eines Kunststoffs oder als Bestandteil eines Holzschutzmittels eingesetzt ist. Ebenso lässt es sich günstig als Bestandteil von Farben und Lacken einsetzen.

Unter Ausnutzung der reaktiven Möglichkeiten der C=C - Doppelbindungen der ungesättigten Fettsäuren in den Pflanzenoelen werden damit halogenfreie Verbindungen versetzt, die einen hohen Anteil an Stickstoff und Phosphor enthalten. Das erhaltene Produkt ist in einem weiten Anwendungsbereich einsetzbar. Neben der flammschützenden Ausrüstung von Kunststoffen sind insbesondere Naturstoffe ausrüstbar.

Neben den brandhemmenden Eigenschaften können durch die Verwendung der modifizierten Pflanzenoele Eigenschaften genutzt werden, die weitere vorteilhafte Eigenschaften in den Anwendungsprodukten bewirken. So können durch die Nutzung der hydrophobierenden und weichmachenden Wirksamkeit der Pflanzenoele und deren Methylester bereits beschriebene Nachteile anderer halogenfreier flammhemmender Mittel bereinigt werden. Weiterhin ist das teilweise Ersetzen spezieller weichmachender Additive im Kunststoffbereich durch ein modifiziertes Pflanzenoel möglich. Durch die Erreichung antistatischer Eigenschaften bei der Verwendung von Pflanzenoel, z. B. Leinoel, können auch Nachteile verschiedener Kunststoffe bezüglich ihrer geringen Kriechstromfestigkeit beeinflusst werden.

Während des Verbrennungsprozesses werden durch die erfindungsgemässen flammhemmenden Mittel bestimmte Mechanismen zur Beeinträchtigung der Brandentwicklung hervorgerufen. Dazu gehört u. a. die Ausbildung einer Sperr- und Schutzschicht auf der Oberfläche, die insbesondere eine Folge der erfindungsgemäss verwendeten Phosphorverbindungen ist. Dadurch kann der Luftsauerstoff vom brennbaren Produkt ferngehalten werden. Ausserdem hat diese Schicht die Fähigkeit, als Hitzeschild zu wirken. Pflanzenoele unterstützen diesen Prozess einer Schichtenbildung ebenfalls. Das geschieht, indem die in den Pflanzenoelen enthaltenen Fettsäuren als kohlenstoffreiche Verbindungen die Ausbildung dieser oberflächenhaften Schicht durch Carbonisierung wirksam befördern.

Der Nachteil des Auswaschens eines flammhemmenden Mittels aus Holz wird aufgehöben, indem das erfindungsgemässe Produkt vor seiner Anwendung in eine ölhaltige Substanz eingebettet wird.

Die Erfindung soll im folgenden an Ausführungsbeispielen näher erläutert werden, um mögliche Variationen anzudeuten.

### Ausführungsbeispiel I:

Zu Herstellung eines flammhemmenden Mittels wird eine Menge von 75 kg Leinoel auf 110 °Celsius erwärmt. Unter Rühren werden dem so erwärmten Leinoel 25 kg Polyphosphorsäure aufgegeben. Nach Ablauf einer längeren Verweilzeit, während der ständig gerührt worden ist, waren dem Gemisch je 100 kg Cyanguanidin und Melamin kontinuierlich sukzessive unter weiterem schonendem ständigem Rühren zugesetzt worden. Die Zumischung des Pflanzenoels ruft exotherme Reaktionen hervor, sodass auf die Konstanz der Reaktionstemperatur zu achten gewesen war.

Der entstandenen Masse waren des weiteren 12,5 kg Phosphorsäure zugegeben worden, die eine Verfestigung der Masse bewirkten. Nach eingetretener Homogenisierung ist die Masse mit 100 kg Calciumkarbonat vermischt worden.

Als Variation bietet sich an, Silikatleichtschaum zuzugeben. Damit lässt sich dessen Zugabe auf 9 Gewichts-Prozent der Gesamtmasse verringern.

### Ausführungsbeispiel II:

Zur Herstellung einer weiteren Variante eines flammhemmenden Mittels wird eine Menge von 30 kg Leinoel auf 110 °Celsius erwärmt. Unter Rühren werden dem so erwärmten Leinoel 10 kg Polyphosphorsäure aufgegeben. Nach Ablauf einer längeren Verweilzeit, während der ständig gerührt worden ist, waren dem Gemisch je 40 kg Cyanguanidin und Melamin kontinuierlich sukzessive unter weiterem schonendem ständigem Rühren zugesetzt worden.

Als Variation bietet sich an, statt des Melamins Cyanursäure zuzusetzen. Zur Flüssigkeitsbindung wird in diesem Falle der Masse ein Gemisch aus 40 kg Calciumkarbonat und 16 kg rotem Phosphor zugegeben, wobei sich das Calciumkarbonat durch Ammoniumsulfat substituieren lässt. Nach Homogenisierung ist die Masse der Grundmasse zur Herstellung eines flammgeschützt ausgerüsteten Produkts zumischungsfähig.

### Ausführungsbeispiel III:

Zur Herstellung eines flammhemmenden Mittels werden 30 kg Leinoel auf 110 °Celsius erwärmt. Unter Rühren werden dem so erwärmten Leinoel 10 kg Polyphosphorsäure aufgegeben. Nach Ablauf einer längeren Verweilzeit, während der ständig gerührt worden ist, waren dem Gemisch je 40 kg Cyanguanidin und Natriumhydrogenphosphat kontinuierlich sukzessive unter weiterem schonendem ständigem Rühren zugesetzt worden.

Der entstandenen Masse wird anschliessend Silikatleichtschaum im Verhältnis 1 zu 1 zur Gesamtmasse zugegeben. Nach eingetretener Homogenisierung ist das Flammschutzmittel anwendungsbereit.

### Ausführungsbeispiel IV:

Zur Herstellung eines flammhemmenden Mittels wird eine Menge von 60 kg Leinoel auf 110 °Celsius erwärmt. Unter Rühren werden dem so erwärmten Leinoel 20 kg Polyphosphorsäure aufgegeben. Nach Ablauf einer längeren Verweilzeit, während der ständig gerührt worden ist, waren dem Gemisch je 80 kg Cyanguanidin und Melamin kontinuierlich sukzessive unter weiterem schonendem ständigem Rühren zugesetzt worden. Unter Hinweis auf bereits erwähnte exotherme Reaktionen war auf die Konstanz der Reaktionstemperatur zu achten.

Der entstandenen Masse waren des weiteren 10 kg Phosphorsäure zugegeben worden, die eine Verfestigung der Masse bewirkten. Nach eingetretener Homogenisierung ist die Masse mit 80 kg Calciumkarbonat vermischt worden.

Das vorhandene Gemisch ist in eine viskose oelige Flüssigkeit eingemischt, mit einem Stabilisator homogenisiert und anschliessend mit einem Produkt in Verbindung gebracht worden.

## Patentansprüche

1. Flammhemmendes Mittel, bestehend aus einem trocknenden Oel mit einem Anteil an ungesättigten Fettsäuren, wobei diese Bestandteile mit wenigstens einer phosphorhaltigen Komponente und mit wenigstens einer stickstoffhaltigen Kohlenstoffverbindung chemisch modifiziert und weitere flüssigkeitsbindende Komponenten ergänzt sind.

2. Flammhemmendes Mittel nach Anspruch 1, bei dem das trocknende Oel mit einem Anteil an ungesättigten Fettsäuren durch ein Methylester des verwendeten trocknenden Oels ersetzt ist.

3. Flammhemmendes Mittel nach einem der Ansprüche 1 oder 2, bei dem das trocknende Oel ein Pflanzenoel ist.

4. Flammhemmendes Mittel nach einem der Ansprüche 2 oder 3, bei dem das Methylester aus einem nativen Pflanzenoel umgeestert ist.

5. Flammhemmendes Mittel nach einem der Ansprüche 1 bis 3, bei dem das Pflanzenoel in einem Bereich von 5 bis 90 Gewichtsanteilen enthalten ist.

6. Flammhemmendes Mittel nach einem der Ansprüche 2 bis 4, bei dem das Merthylester in einem Bereich von 5 bis 90 Gewichtsanteilen enthalten ist.

7. Flammhemmendes Mittel nach einem der Ansprüche 1 bis 6, bei dem wenigstens eine phosphorhaltige Komponente eine phosphorhaltige Säure ist.

8. Flammhemmendes Mittel nach Anspruch 7, bei dem die phosphorhaltige Säure eine Orthophosphorsäure ist.

9. Flammhemmendes Mittel nach Anspruch 7, bei dem die phosphorhaltige Säure eine Metaphosphorsäure ist.

10. Flammhemmendes Mittel nach Anspruch 7, bei dem die phosphorhaltige Säure eine Polyphosphorsäure ist.

11. Flammhemmendes Mittel nach einem der Ansprüche 1 bis 10, bei dem eine der phosphorhaltige Komponenten ein Salz einer phosphorhaltigen Säure ist.

12. Flammhemmendes Mittel nach Anspruch 11, bei dem das Salz der phosphorhaltigen Säure der Gruppe der Natriumphosphate zugehörig ist.

13. Flammhemmendes Mittel nach Anspruch 12, bei dem das Natriumphosphat ein Natriumdihydrogenphosphat ist.

14. Flammhemmendes Mittel nach Anspruch 12, bei dem das Natriumphosphat ein Dinatriumhydrogenphosphat ist.

15. Flammhemmendes Mittel nach Anspruch 11, bei dem das Salz der phosphorhaltigen Säure der Gruppe der Ammoniumphosphate zugehörig ist.

16. Flammhemmendes Mittel nach Anspruch 15, bei dem das Ammoniumphosphat ein Monoammoniumphosphat ist.

17. Flammhemmendes Mittel nach Anspruch 15, bei dem das Ammoniumphosphat ein Diammoniumorthophosphat ist.

18. Flammhemmendes Mittel nach Anspruch 15, bei dem das Ammoniumphosphat ein Ammoniumdihydrogenphosphat ist.

19. Flammhemmendes Mittel nach Anspruch 15, bei dem das Ammoniumphosphat ein Ammoniumpolyphosphat ist.

20. Flammhemmendes Mittel nach Anspruch 15, bei dem mindestens eine der Komponenten Monoammoniumphosphat, Diammoniumorthophosphat, Ammoniumdihydrogenphosphat und Ammoniumpolyphosphat mit wenigstens einer der anderen verwendet ist.

21. Flammhemmendes Mittel nach einem der Ansprüche 1 bis 20, bei dem die phosphorhaltigen Komponenten in einem Bereich von 5 bis 70 Gewichtsanteilen zugesetzt sind.

22. Flammhemmendes Mittel nach einem der Ansprüche 1 bis 21, bei dem die stickstoffhaltige Kohlenstoffverbindung Cyanguanidin ist.

23. Flammhemmendes Mittel nach einem der Ansprüche 1 bis 21, bei dem die stickstoffhaltige Kohlenstoffverbindung Guanidincarbonat ist.

24. Flammhemmendes Mittel nach einem der Ansprüche 1 bis 21, bei dem die stickstoffhaltige Kohlenstoffverbindung Guanidiniumthiocarbonat ist.

25. Flammhemmendes Mittel nach einem der Ansprüche 1 bis 21, bei dem die stickstoffhaltige Kohlenstoffverbindung ein Harnstoff ist.

26. Flammhemmendes Mittel nach einem der Ansprüche 1 bis 21, bei dem die stickstoffhaltige Kohlenstoffverbindung Melamin ist.

27. Flammhemmendes Mittel nach einem der Ansprüche 1 bis 21, bei dem die stickstoffhaltige Kohlenstoffverbindung Melamincyanurat ist.

28. Flammhemmendes Mittel nach einem der Ansprüche 1 bis 21, bei dem die stickstoffhaltige Kohlenstoffverbindung Cyanursäure ist.

29. Flammhemmendes Mittel nach einem der Ansprüche 1 bis 21, bei dem die stickstoffhaltige Kohlenstoffverbindung Barbitursäure ist.

30. Flammhemmendes Mittel' nach einem der Ansprüche 1 bis 21, bei dem die stickstoffhaltige Kohlenstoffverbindung Ammoniumthiocyanat ist.

31. Flammhemmendes Mittel nach einem der Ansprüche 1 bis 21, bei dem mindestens eine der Komponenten Cyanguanidin, Guanidincarbonat, Guanidiniumthiocarbonat, Harnstoff, Melamin, Melamincyanurat, Cyanursäure, Barbitursäure und Ammoniumthiocyanat mit wenigstens einer der anderen verwendet ist.

32. Flammhemmendes Mittel nach einem der Ansprüche 1 bis 31, bei dem die stickstoffhaltigen Kohlenstoffverbindungen in einem Bereich von 10 bis 60 % Gewichtsanteilen zugesetzt sind.

33. Flammhemmendes Mittel nach einem der Ansprüche 1 bis 32, bei dem die flüssigkeitsbindende Komponente Calciumoxid ist.

34. Flammhemmendes Mittel nach einem der Ansprüche 1 bis 32, bei dem die flüssigkeitsbindende Komponente Calciumcarbonat ist.

35. Flammhemmendes Mittel nach einem der Ansprüche 1 bis 32, bei dem die flüssigkeitsbindende Komponente Ammoniumsulfat ist.

36. Flammhemmendes Mittel nach einem der Ansprüche 1 bis 32, bei dem die flüssigkeitsbindende Komponente Silikatleichtschaum ist.

37. Flammhemmendes Mittel nach einem der Ansprüche 1 bis 32, bei dem die flüssigkeitsbindende Komponente roter Phosphor ist.

38. Flammhemmendes Mittel nach einem der Ansprüche 1 bis 32, bei dem als flüssigkeitsbindende Komponente wenigstens eine der Komponenten Calciumoxid, Calciumcarbonat, Ammoniumsulfat, Silikatleichtschaum und roter Phosphor mit wenigstens einer der anderen verwendet ist.

39. Flammhemmendes Mittel nach einem der Ansprüche 1 bis 38, bei dem dieses als Bestandteil eines Dämmstoffes eingesetzt ist.

40. Flammhemmendes Mittel nach einem der Ansprüche 1 bis 38, bei dem dieses als Bestandteil eines Füllstoffes eingesetzt ist.

41. Flammhemmendes Mittel nach einem der Ansprüche 1 bis 38, bei dem dieses als Bestandteil des Materials von Span- beziehungsweise Faserplatten eingesetzt ist.

42. Flammhemmendes Mittel nach einem der Ansprüche 1 bis 38, bei dem dieses als Bestandteil eines Kunststoffs eingesetzt ist.

43. Flammhemmendes Mittel nach einem der Ansprüche 1 bis 38, bei dem dieses als Bestandteil eines Holzschutzmittels eingesetzt ist.

44. Flammhemmendes Mittel nach einem der Ansprüche 1 bis 38, bei dem dieses als Bestandteil von Farben und Lacken eingesetzt ist.

45. Flammhemmendes Mittel nach Anspruch 43, bei dem diesem ein bekanntes fungizid wirkendes Mittel zugesetzt ist.

46. Flammhemmendes Mittel nach Anspruch 43 oder 45, bei dem diesem ein bekanntes insektizid wirekendes Mittel zugesetzt ist.

## Claims

1. Flame-retardant agent, consisting of a drying oil with a content of unsaturated fat acids where these components are chemically modified with at least one phosphorous component and with at least one nitrogenous carbon compound and are completed with additional fluid binding components.

2. Flame-retardant agent according to claim 1 where the drying oil with a content of unsaturated fat acids is substituted by a methyl ester of the used drying oil.

3. Flame-retardant agent according to one of the claims 1 or 2 where the drying oil is a vegetable oil.

4. Flame-retardant agent according to one of the claims 2 or 3 where the methyl ester is transesterified by means of a native vegetable oil.

5. Flame-retardant agent according to one of the claims 1 - 3 where the vegetable oil is contained in a ratio of 5 - 90 mass units.

6. Flame-retardant agent according to one of the claims 2 - 4 where the methyl ester is contained in a ratio of 5 - 90 mass units.

7. Flame-retardant agent according to one of the claims 1 - 6 where at least one of the phosphorous component is a phosphorous acid.

8. Flame-retardant agent according to claim 7 where the phosphorous acid is orthophosphoric acid.

9. Flame-retardant agent according to claim 7 where the phosphorous acid is metaphosphoric acid.

10. Flame-retardant agent according to claim 7 where the phosphorous acid is polyphosphoric acid.

11. Flame-retardant agent according one to the claims 1 - 10 where one of the phosphorous components is a salt of a phosphorous acid.

12. Flame-retardant agent according to claim 11 where the salt of the phosphorous acid belongs to the group of sodium phosphates.

13. Flame-retardant agent according to claim 12 where the sodium phosphate is sodium dihydrogen phosphate.

14. Flame-retardant agent according to claim 12 where the sodium phosphate is disodium hydrogen phosphate.

15. Flame-retardant agent according to claim 11 where the salt of the phosphorous acid belongs to the group of ammonium phosphates.

16. Flame-retardant agent according to claim 15 where the ammonium phosphate is monoammonium phosphate.

17. Flame-retardant agent according to claim 15 where the ammonium phosphate is diammonium orthophosphate.

18. Flame-retardant agent according to claim 15 where the ammonium phosphate is ammonium dihydrogen phosphate.

19. Flame-retardant agent according to claim 15 where the ammonium phosphate is ammonium polyphosphate.

20. Flame-retardant agent according to claim 15 where at least one of the components monoammonium phosphate, diammonium orthophosphate, ammonium dihydrogen phosphate, and ammonium polyphosphate is used together with one of the other components.

21. Flame-retardant agent according to one of the claims 1 - 20 where the phosphorous components are added in a ratio of 5 - 70 mass units.

22. Flame-retardant agent according to one of the claims 1 - 21 where the nitrogenous carbon compound is cyanguanidine.

23. Flame-retardant agent according to one of the claims 1 - 21 where the nitrogenous carbon compound is guanidine carbonate.

24. Flame-retardant agent according to one of the claims 1 - 21 where the nitrogenous carbon compound is guanidine thiocarbonate.

25. Flame-retardant agent according to one of the claims 1 - 21 where the nitrogenous carbon compound is urea.

26. Flame-retardant agent according to one of the claims 1 - 21 where the nitrogenous carbon compound is melamine.

27. Flame-retardant agent according to one of the claims 1 - 21 where the nitrogenous carbon compound is melamine cyanurate.

28. Flame-retardant agent according to one of the claims 1 - 21 where the nitrogenous carbon compound is cyanuric acid.

29. Flame-retardant agent according to one of the claims 1 - 21 where the nitrogenous carbon compound is barbituric acid.

30. Flame-retardant agent according to one of the claims 1 - 21 where the nitrogenous carbon compound is ammonium thiocyanate.

31. Flame-retardant agent according to one of the claims 1 - 21 where at least one of the components cyanguanidine, guanidine carbonate, guanidine thiocarbonate, urea, melamine, melamine cyanurate, cyanuric acid, barbituric acid, and ammonium thiocyanate is used together with at least one of the other components.

32. Flame-retardant agent according to one of the claims 1 - 31 where the nitrogenous components are added in a ratio of 10 - 60 mass units.

33. Flame-retardant agent according to one of the claims 1 - 32 where the fluid binding component is calcium oxide.

34. Flame-retardant agent according to one of the claims 1 - 32 where the fluid binding component is calcium carbonate.

35. Flame-retardant agent according to one of the claims 1 - 32 where the fluid binding component is ammonium sulfate.

36. Flame-retardant agent according to one of the claims 1 - 32 where the fluid binding component is silicate light foam.

37. Flame-retardant agent according to one of the claims 1 - 32 where the fluid binding component is red phosphorus.

38. Flame-retardant agent according to one of the claims 1 - 32 where as fluid binding component at least one of the components calcium oxide, calcium carbonate, ammonium sulfate, silicate light foam, and red phosphorus is used together with at least one of the other components.

39. Flame-retardant agent according to one of the claims 1 - 38 where this agent is used as component of a insulating material.

40. Flame-retardant agent according to one of the claims 1 - 38 where this agent is used as component of a filling material.

41. Flame-retardant agent according to one of the claims 1 - 38 where this agent is used as component of the material of chipboards or fiberboards.

42. Flame-retardant agent according to one of the claims 1 - 38 where this agent is used as component of a plastic material.

43. Flame-retardant agent according to one of the claims 1- 38 where this agent is used as component of a wood preserver.

44. Flame-retardant agent according to one of the claims 1- 38 where this agent is used as component of paints and lacquers.

45. Flame-retardant agent according to claim 43 where a generally known agent with fungicidal activity is added to this flame-retardant agent.

46. Flame-retardant agent according to claim 43 or 45 where a generally known agent with insecticidal activity is added to this flame-retardant agent.

## Revendications

1. Agent ignifugeant composé d'une huile siccative avec une part d'acides gras insaturés, ces constituants étant modifiés chimiquement par au moins un composant phosphoreux et par au moins un composé carboné azoté, et complétés par d'autres composants liant les liquides.

2. Agent ignifugeant suivant le critère 1, chez lequel l'huile siccative avec une part d'acides gras insaturés est remplacée par un ester méthylique de l'huile siccative utilisée.

3. Agent ignifugeant suivant l'un des critères 1 ou 2, chez lequel l'huile siccative est une huile végétale.

4. Agent ignifugeant suivant l'un des critères 2 ou 3, chez lequel l'ester méthylique est transestérifié d'une huile végétale native.

5. Agent ignifugeant suivant l'un des critères de 1 à 3, chez lequel l'huile végétale est contenue dans une plage de 5 à 90 fractions pondérales.

6. Agent ignifugeant suivant l'un des critères de 2 à 4, chez lequel l'ester méthylique est contenu dans une plage de 5 à 90 fractions pondérales.

7. Agent ignifugeant suivant l'un des critères de 1 à 6, chez lequel au moins un composant phosphoreux est un acide phosphoreux.

8. Agent ignifugeant suivant le critère 7, chez lequel l'acide phosphoreux est un acide orthophosphorique.

9. Agent ignifugeant suivant le critère 7, chez lequel l'acide phosphoreux est un acide métaphosphorique.

10. Agent ignifugeant suivant le critère 7, chez lequel l'acide phosphoreux est un acide polyphosphorique.

11. Agent ignifugeant suivant l'un des critères de 1 à 10, chez lequel au moins l'un composant phosphoreux est un sel d'un acide phosphoreux.

12. Agent ignifugeant suivant le critère 11, chez lequel le sel de l'acide phosphoreux fait partie du groupe des phosphates de sodium.

13. Agent ignifugeant suivant le critère 12, chez lequel le phosphate de sodium est un dihydrogénophosphaté de sodium.

14. Agent ignifugeant suivant le critère 12, chez lequel le phosphate de sodium est un hydrogénophosphate de disodium.

15. Agent ignifugeant suivant le critère 11, chez lequel le sel de l'acide phosphoreux fait partie du groupe des phosphates d'ammonium.

16. Agent ignifugeant suivant le critère 15, chez lequel le phosphate d'ammonium est un phosphate de monoammonium.

17. Agent ignifugeant suivant le critère 15, chez lequel le phosphate d'ammonium est un orthophosphate de diammonium.

18. Agent ignifugeant suivant le critère 15, chez lequel le phosphate d'ammonium est un dihydrogénophosphate d'ammonium.

19. Agent ignifugeant suivant le critère 15, chez lequel le phosphate d'ammonium est un polyphosphate d'ammonium.

20. Agent ignifugeant suivant le critère 15, chez lequel au moins l'un des composants, tels que phosphate de monoammonium, orthophosphate de diammonium, dihydrogénophosphate d'ammonium et polyphosphate d'ammonium, est utilisé avec au moins l'un des autres.

21. Agent ignifugeant suivant l'un des critères de 1 à 20, chez lequel les composants phosphoreux sont additionnés dans une plage de 5 à 70 fractions pondérales.

22. Agent ignifugeant suivant l'un des critères de 1 à 21, chez lequel le composé carboné azoté est de la guanidine cyanique.

23. Agent ignifugeant suivant l'un des critères de 1 à 21, chez lequel le composé carboné azoté est du carbonate de guanidine.

24. Agent ignifugeant suivant l'un des critères de 1 à 21, chez lequel le composé carboné azoté est du thiocarbonate de guanidinium.

25. Agent ignifugeant suivant l'un des critères de 1 à 21, chez lequel le composé carboné azoté est de l'urée.

26. Agent ignifugeant suivant l'un des critères de 1 à 21, chez lequel le composé carboné azoté est de la mélamine.

27. Agent ignifugeant suivant l'un des critères de 1 à 21, chez lequel le composé carboné azoté est du cyanurate de mélamine.

28. Agent ignifugeant suivant l'un des critères de 1 à 21, chez lequel le composé carboné azoté est de l'acide cyanurique.

29. Agent ignifugeant suivant l'un des critères de 1 à 21, chez lequel le composé carboné azoté est de l'acide barbiturique.

30. Agent ignifugeant suivant l'un des critères de 1 à 21, chez lequel le composé carboné azoté est du thiocyanate d'ammonium.

31. Agent ignifugeant suivant les critères 1 à 21, chez lequel au moins l'un des composants, tels que guanidine cyanique, carbonate de guanidine, thiocarbonate de guanidinium, urée, mélamine, cyanurate de mélamine, acide cyanurique, acide barbiturique et thiocyanate d'ammonium, est utilisé avec au moins l'un des autres.

32. Agent ignifugeant suivant l'un des critères de 1 à 31, chez lequel les composés carbonés azotés sont additionnés dans une plage de 10 à 60% de fractions pondérales.

33. Agent ignifugeant suivant l'un des critères de 1 à 32, chez lequel le composant liant les liquides est de l'oxyde de calcium.

34. Agent ignifugeant suivant l'un des critères de 1 à 32, chez lequel le composant liant les liquides est du carbonate de calcium.

35. Agent ignifugeant suivant l'un des critères de 1 à 32, chez lequel le composant liant les liquides est du sulfate d'ammonium.

36. Agent ignifugeant suivant l'un des critères de 1 à 32, chez lequel le composant liant les liquides est de la mousse légère de silicate.

37. Agent ignifugeant suivant l'un des critères de 1 à 32, chez lequel le composant liant les liquides est du phosphore rouge.

38. Agent ignifugeant suivant l'un des critères de 1 à 32, chez lequel, au moins l'un des composants, tels que oxyde de calcium, carbonate de calcium, sulfate d'ammonium, mousse légère de silicate et phosphore rouge, est utilisé comme composant liant les liquides avec au moins l'un des autres.

39. Agent ignifugeant suivant l'un des critères de 1 à 38, chez lequel celui-ci est utilisé comme constituant d'un produit isolant.

40. Agent ignifugeant suivant l'un des critères de 1 à 38, chez lequel celui-ci est utilisé comme constituant d'une matière de remplissage.

41. Agent ignifugeant suivant l'un des critères de 1 à 38, chez lequel celui-ci est utilisé comme constituant d'un matériau de panneaux de copeaux ou de fibres.

42. Agent ignifugeant suivant l'un des critères de 1 à 38, chez lequel celui-ci est utilisé comme constituant d'une matière plastique.

43. Agent ignifugeant suivant l'un des critères de 1 à 38, chez lequel celui-ci est utilisé comme constituant d'un produit de préservation du bois.

44. Agent ignifugeant suivant l'un des critères de 1 à 38, chez lequel celui-ci est utilisé comme constituant de peintures ou de laques.

45. Agent ignifugeant suivant le critère 43, auquel un produit à effet fongicide connu est additionné.

46. Agent ignifugeant suivant le critère 43 ou 45, auquel un produit à effet insecticide connu est additionné.
